# FASCICULE DE BREVET EUROPEEN

(11) **EP 3 581 824 B1**
(45) Date de publication et mention de la délivrance du brevet: **16.09.2020**
(21) Numéro de dépôt: 19175401.9
(22) Date de dépôt: 20.05.2019
(51) Int. Cl.: F16D 65/12

(54) **SYSTEME DE FREINAGE A DISQUE ET AERONEF**
SCHEIBENBREMSSYSTEM UND LUFTFAHRZEUG
DISC BRAKE SYSTEM AND AIRCRAFT

(30) Priorité: 12.06.2018 FR 1800599
(43) Date de publication de la demande: 18.12.2019
(73) Titulaire: Airbus Helicopters, 13725 Marignane Cedex (FR)
(72) Inventeur: PRUD'HOMME LACROIX, Pierre, 13127 VITROLLES (FR); AZZARELLO, Julien, 13001 MARSEILLE (FR)
(74) Mandataire: GPI & Associés

(56) Documents cités:
- WO-A1-03/029684
- DE-U1-202015 105 418
- US-A1- 2012 067 679
- US-B1- 6 467 588

## Description

La présente invention concerne un système de freinage à disque et un aéronef comprenant un tel système de freinage.

Un système de freinage connu pour aéronef comporte un disque monté flottant par rapport à une jante portant un pneumatique ainsi qu'au moins un frein. Le frein est configuré pour freiner le disque de frein et par suite la jante.

Le disque est muni d'une piste de freinage portant des premières dents qui forment des tenons. Les premières dents sont réparties circonférentiellement au regard d'un cercle centré sur un axe central du disque, chaque première dent s'étendant radialement au regard de cet axe central. Chaque première dent s'étend circonférentiellement entre deux facettes.

La jante est en outre munie de deuxièmes dents, deux bords de deuxièmes dents adjacentes délimitant circonférentiellement une encoche formant une mortaise apte à accueillir un tenon du disque.

Dès lors, chaque première dent est positionnée dans une encoche, les deux facettes d'une première dent étant en regard de deux bords de deux deuxièmes dents. Chaque première dent est alors agencée circonférentiellement entre deux bords de deux deuxièmes dents. Deux jeux fonctionnels séparent circonférentiellement chaque facette d'une première dent du disque respectivement de deux deuxièmes bords de la jante.

En outre, chaque deuxième dent peut porter deux patins accolés à ses bords. De tels patins sont parfois dénommés « clip » et peuvent être vissés ou rivetés à la jante. De même, au moins un patin peut être fixé à chaque première dent.

En outre, un fil frein peut être fixé à la jante pour empêcher qu'une deuxième dent sorte axialement d'une encoche.

Un tel disque de frein est parfois utilisé au sein d'un système de freinage comprenant un unique frein ou plusieurs freins qui ne sont pas régulièrement répartis autour de l'axe de rotation de la roue. Lors d'un freinage, les deux facettes d'une première dent du disque de frein peuvent subir alternativement des efforts en entrant en contact avec des bords de la jante. Il peut en résulter des efforts pulsés appliqués à la jante et à d'éventuels organes de roulement montés sur la jante. En outre, le disque de frein peut osciller dans la jante et peut générer des vibrations dans le ou les freins.

Ces phénomènes sont susceptibles de contribuer à une usure prématurée de l'interface disque/jante et/ou à l'apparition de vibrations audibles et/ou de sollicitations en fatigue.

Le document FR 3007096 présente un système de freinage qui comprend un disque muni de tenons.

Le document FR 3018880 présente un actionneur de frein.

Le document US 7316301 présente un étrier de frein.

Les documents DE 20 2015 105418, WO 03/029684, US 2012/067679 et US 6 467 588 sont aussi connus.

La présente invention a alors pour objet de proposer un système de freinage innovant pour tendre à optimiser sa durée de vie.

Un tel système de freinage est muni d'un disque de frein et d'une jante. La jante est configurée pour porter au moins un pneumatique. Le disque de frein comprend un support et une pluralité de premières dents, les premières dents s'étendant chacune à partir du support, par exemple sensiblement radialement. La jante comprend un corps de jante et des deuxièmes dents solidaires du corps de jante, les deuxièmes dents étant réparties circonférentiellement autour d'un axe de rotation de la jante. Chaque deuxième dent s'étend parallèlement à une direction axiale à partir d'un flanc du corps de jante jusqu'à une face d'extrémité de la deuxième dent. Chaque deuxième dent s'étend de plus circonférentiellement entre deux bords de cette deuxième dent, à savoir au regard d'un cercle centré sur l'axe de rotation de la jante. La jante présente des encoches, chaque encoche étant délimitée par ledit flanc et deux bords de deux deuxièmes dents adjacentes, chaque première dent étant positionnée dans une dite encoche, chaque première dent s'étendant parallèlement à ladite direction axiale d'une face avant en regard dudit flanc vers une face arrière de cette première dent.

La direction axiale peut correspondre à l'axe de rotation de la jante.

Le système de freinage comporte un anneau de maintien, cet anneau de maintien étant fixé à chaque face d'extrémité et à chaque face arrière, un jeu circonférentiel séparant chaque première dent de deux deuxièmes dents entre lesquelles la première dent est circonférentiellement agencée.

Les deuxièmes dents et le corps de jante peuvent former une pièce monobloc, à savoir d'un seul tenant. De même, les premières dents et le support peuvent former une pièce monobloc, à savoir d'un seul tenant.

Dès lors, le disque de frein est fixé par ses premières dents aux deuxièmes dents de la jante par l'intermédiaire de l'anneau de maintien. L'anneau de maintien peut être par exemple riveté ou vissé aux premières dents et aux deuxièmes dents en fonction des contraintes d'installation et de freinage.

Cet anneau de maintien peut autoriser des mouvements relatifs du disque de frein dans la jante tout en transmettant les charges de freinage pour freiner la roue. Les premières dents peuvent présenter une liberté de mouvement restreinte dans une encoche, mais cette liberté de mouvement est limitée par l'anneau de maintien.

L'anneau de maintien peut notamment au moins réduire les risques de contact entre les premières dents et les deuxièmes dents, voire entre les premières dents et le corps de jante.

En cas de rupture accidentelle de l'anneau de maintien, le freinage pourra s'opérer via une interférence entre les premières dents et les deuxièmes dents.

Eventuellement, un tel système de freinage peut rendre inutile les patins de l'état de l'art et peut faciliter l'usinage des encoches de la jante.

Le système de freinage peut comporter au moins une ou plusieurs des caractéristiques qui suivent.

Par exemple, l'anneau de maintien peut être déformable élastiquement parallèlement à ladite direction axiale pour conférer à chaque première dent une liberté de mouvement dans une encoche.

Eventuellement, l'anneau de maintien peut être uniquement déformable élastiquement parallèlement à ladite direction axiale. Néanmoins, l'anneau de maintien peut aussi se voiler légèrement suite à un léger déplacement angulaire

Un tel anneau de maintien peut prendre la forme d'un disque souple.

Par exemple, un anneau de maintien peut présenter une souplesse suffisante pour tolérer un déplacement axial de quelques millimètres et un voile de quelques degrés..

Selon un aspect, l'anneau de maintien peut être accolé partiellement contre chaque face arrière en l'absence de déformation de l'anneau de maintien.

L'anneau de maintien peut présenter une face plane à accoler au disque de frein et à la jante. Par contre, les faces arrière ne sont éventuellement pas planes pour permettre une déformation de l'anneau de maintien sans contact avec des arêtes vives.

Par exemple, chaque première dent pouvant s'étendre circonférentiellement d'une première facette en regard d'un bord d'une deuxième dent jusqu'à une deuxième facette en regard d'un autre bord d'une autre deuxième dent, chaque face arrière pouvant comprendre d'une première facette vers une deuxième facette un premier tronçon d'extrémité puis un tronçon central suivi d'un deuxième tronçon d'extrémité, un premier jeu axial peut séparer en l'absence de déformation de l'anneau de maintien le premier tronçon d'extrémité et l'anneau de maintien et un deuxième jeu axial peut séparer en l'absence de déformation de l'anneau de maintien le deuxième tronçon d'extrémité et l'anneau de maintien, l'anneau de maintien étant fixé uniquement au tronçon central.

Si une première dent tend à s'éloigner du flanc du corps de jante, l'anneau de maintien se déforme et « épouse » les tronçons d'extrémité. Une telle déformation peut tendre à optimiser la durée de vie de l'anneau de maintien.

Selon un aspect, l'anneau de maintien peut être accolé partiellement contre chaque face d'extrémité en l'absence de déformation de l'anneau de maintien.

L'anneau de maintien peut présenter une face plane à accoler au disque de frein et à la jante. Par contre, les faces d'extrémité ne sont éventuellement pas planes pour permettre une déformation de l'anneau de maintien sans contact avec des arêtes vives.

Par exemple, chaque face d'extrémité pouvant comprendre d'un bord vers l'autre bord de cette face d'extrémité un premier secteur d'extrémité puis un secteur central suivi d'un deuxième secteur d'extrémité, un premier jeu de fonctionnement peut séparer en l'absence de déformation de l'anneau de maintien le premier secteur d'extrémité et l'anneau de maintien et un deuxième jeu de fonctionnement peut séparer en l'absence de déformation de l'anneau de maintien le deuxième secteur d'extrémité et l'anneau de maintien, l'anneau de maintien étant uniquement fixé au secteur central.

Si une première dent tend à se rapprocher du flanc du corps de jante, l'anneau de maintien se déforme et « épouse » un secteur d'extrémité. Une telle déformation peut tendre à optimiser la durée de vie de l'anneau de maintien.

Selon un aspect, au moins un dit jeu circonférentiel peut avoir une valeur qui augmente selon un sens allant de l'anneau de maintien vers le flanc.

Une telle caractéristique peut tendre à réduire les risques d'interférence entre une première dent et une deuxième dent lorsque le disque de maintien se déforme.

Selon un aspect, le système de freinage peut comporter au moins une plaquette de frein et un actionneur, ledit actionneur étant configuré pour accoler lors d'un freinage ladite au moins une plaquette et ledit disque.

Selon un aspect, le support peut avoir une forme de disque creux en son centre qui s'étend parallèlement à la direction axiale entre deux faces de disque formant respectivement deux pistes de freinage. L'anneau de maintien n'est par exemple pas en vis-à-vis du support du disque de frein selon une direction parallèle à la direction axiale.

Selon un aspect, parallèlement à ladite direction axiale l'anneau de maintien peut être uniquement en vis-à-vis des premières dents du disque de frein.

Par exemple, l'anneau de maintien présente une face interne circulaire et une face externe circulaire séparées par une hauteur, ladite hauteur étant égale à la hauteur de chaque première dent.

Selon un aspect, le disque de frein peut être plat.

Selon un aspect, ledit anneau de maintien peut être plat.

Par ailleurs, l'invention vise aussi un giravion comprenant au moins un système de freinage du type décrit précédemment.

L'invention et ses avantages apparaîtront avec plus de détails dans le cadre de la description qui suit avec des exemples donnés à titre illustratif en référence aux figures annexées qui représentent :
- la figure 1, une vue d'un train d'atterrissage d'un giravion muni d'un système de freinage selon l'invention,
- la figure 2, une vue d'un disque d'un système de freinage selon l'invention,
- la figure 3, une vue d'une jante d'un système de freinage selon l'invention,
- la figure 4, une vue d'un anneau de maintien d'un système de freinage selon l'invention,
- la figure 5, une vue montrant une première dent et une deuxième dent fixées à un anneau de maintien,
- la figure 6, une vue de dessus d'une première dent selon la figure 5,
- la figure 7, une vue de dessus d'une deuxième dent selon la figure 5,
- la figure 8, une coupe partielle montrant un anneau de maintien au droit d'une deuxième dent,
- la figure 9, un diagramme illustrant les charges entre un disque de frein et une jante selon l'état de la technique,
- la figure 10, un diagramme illustrant les charges entre un disque de frein et une jante selon l'invention, et
- la figure 11, un diagramme illustrant la charge d'une première dent selon l'état de la technique et selon l'invention.

Les éléments présents dans plusieurs figures distinctes sont affectés d'une seule et même référence.

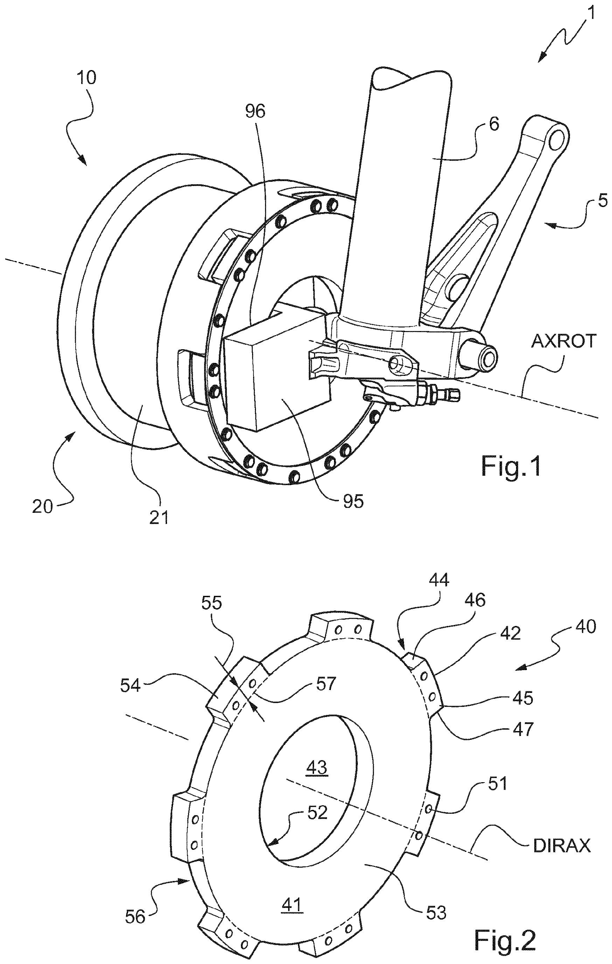

La figure 1 présente un giravion 1 qui est muni d'un système de freinage selon l'invention.

Le giravion 1 peut notamment comprendre un train d'atterrissage 5. Ce train d'atterrissage 5 possède une jambe de train 6 portant une fusée de roue.

Dès lors, un système de freinage 10 est muni d'une jante 20 mobile en rotation autour d'un axe de rotation AXROT. Des moyens de roulement usuels peuvent être agencés entre la jante 20 et la fusée. En outre, la jante 20 porte un pneumatique non illustré par commodité.

Le système de freinage 10 comporte de plus un disque de frein 40 qui coopère avec la jante 20 pour pouvoir le freiner. Ce système de freinage 10 est de plus muni d'un anneau de maintien 60 qui est fixé au disque de frein 40 et à la jante 20.

Par ailleurs, le système de freinage 10 peut comporter un frein qui coopère avec le disque de frein 40. Par exemple, le frein comporte au moins une plaquette de frein 96 et un actionneur 95. L'actionneur 95 est configuré pour accoler lors d'un freinage chaque plaquette de frein 96 et le disque de frein 40 afin de freiner la rotation du disque de frein 40 et par conséquent la rotation de la roue équipée de la jante et du pneumatique.

La figure 2 illustre un disque de frein 40 selon l'invention.

Ce disque de frein 40 comporte un support 41. Par exemple, le support 41 a la forme d'un disque muni d'une partie centrale 43 évidée. Ce support 41 peut s'étendre radialement au regard d'une direction axiale DIRAX d'une tranche circulaire interne 52 jusqu'à un cercle externe 57 de ce support 41. Ce support 41 peut de plus s'étendre selon la direction axiale DIRAX d'une première face de disque 53 de ce support 41formant une première piste de freinage jusqu'à une deuxième face de disque 56 de ce support 41formant une deuxième piste de freinage. La direction axiale peut être confondue avec l'axe de rotation AXROT de la jante, et/ou peut être un axe de symétrie central du disque de frein.

En outre, le support 41 porte une pluralité de premières dents 42 du disque de frein 40. Chaque première dent 42 s'étend à partir du support 41. En particulier, chaque première dent 42 peut s'étendre sensiblement radialement au regard de la direction axiale DIRAX à partir du cercle externe 57.

Dès lors, chaque première dent 42 s'étend selon une direction parallèle à la direction axiale DIRAX d'une face avant 44 de la première dent 42 vers une face arrière 45 de la première dent 42.

Le disque de frein pouvant être plat, la face avant 44 et la deuxième face de disque 56 peuvent être coplanaires, la face arrière 45 et la première face de disque 53 étant aussi coplanaires. Le disque a alors une épaisseur constante.

Selon un autre aspect, chaque première dent peut comprendre au moins un trou débouchant au moins sur la face arrière, et par exemple deux trous taraudés.

Par ailleurs, chaque première dent 42 s'étend circonférentiellement CIR d'une première facette 46 de la première dent 42 jusqu'à une deuxième facette 47 de la première dent 42, au regard d'un cercle virtuel centré sur la direction axiale.

En outre chaque première dent s'étend radialement du cercle externe 57 jusqu'à un sommet 54 de la première dent 42 sur une hauteur de dent 55.

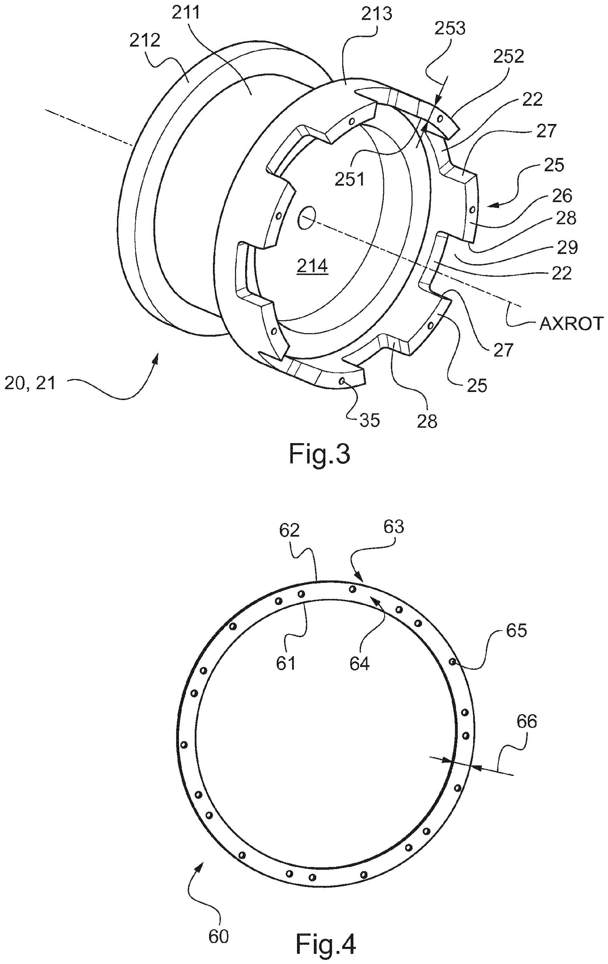

Par ailleurs, la figure 3 illustre une jante 20 selon l'invention.

Cette jante 20 est munie d'un corps de jante 21 apte à porter un pneumatique. Par exemple, le corps de jante 21 comporte une base 211 autour de laquelle est disposé un pneumatique. Le corps de jante 21 peut de plus posséder deux rebords latéraux 212, 213 disposés axialement selon l'axe de rotation AXROT de part et d'autre de la base 211. Chaque rebord latéral 212 peut s'étendre au moins en élévation à partir de la base 211. En outre, le corps de jante peut comprendre un voile 214 à articuler à une fusée. Par exemple, un voile est solidaire de la base et/ou d'un rebord latéral.

De plus, la jante 20 est munie d'une pluralité de deuxièmes dents 25 solidaires du corps de jante 21. Chaque deuxième dent 25 s'étend donc à partir du corps de jante 21 et par exemple d'un rebord latéral 213 de ce corps de jante

Les deuxièmes dents 25 sont réparties circonférentiellement autour de l'axe de rotation AXROT de la jante 20. Les deuxièmes dents 25 peuvent former chacune un tronçon circonférentiel d'un anneau virtuel, cet anneau virtuel étant centré sur l'axe de rotation de la jante.

Chaque deuxième dent 25 s'étend axialement à partir d'un flanc 22 du corps de jante 21, par exemple un flanc d'un rebord latéral 213, jusqu'à une face d'extrémité 26 de cette deuxième dent 25. Au moins certaines portions des faces d'extrémité des deuxièmes dents peuvent être coplanaires. En outre, chaque deuxième dent 25 s'étend circonférentiellement entre deux bords 27, 28 de cette deuxième dent 25. Par ailleurs, chaque deuxième dent peut comprendre au moins un trou débouchant sur la face d'extrémité, et par exemple un trou taraudé 35.

Par conséquent, la jante 20 présente des encoches 29 ouvertes sur l'extérieur de la jante 20, chaque encoche 29 étant délimitée par le flanc 22 et deux bords 27, 28 de deux deuxièmes dents 25 adjacentes. Chaque encoche est délimitée par une paroi ayant sensiblement une forme de U vue de dessus, le flanc formant le fond du U et deux bords de deux deuxièmes dents formant les branches du U.

En outre, chaque dent peut s'étendre radialement entre une première face de dent 251 en forme de tronçon d'anneau et une deuxième face de dent 252 en forme de tronçon d'anneau qui sont séparées par une épaisseur de dent 253.

Par ailleurs, la figure 4 illustre un anneau de maintien 60 selon l'invention.

Cet anneau de maintien peut s'étendre radialement au regard de l'axe de rotation AX d'une face circulaire interne 61 de l'anneau de maintien jusqu'à une face circulaire externe 62 de l'anneau de maintien. Une hauteur d'anneau 66 sépare radialement la face circulaire interne 61 et la face circulaire externe 62.

Par ailleurs, l'anneau de maintien peut s'étendre d'une face libre 63 jusqu'à une face de contact 64 de l'anneau de maintien, la face de contact 64 étant à disposer contre les premières dents 42 et les deuxièmes dents 25.

De plus, l'anneau de maintien peut comprendre des perçages 65 pour être vissé ou riveté aux premières dents et aux deuxièmes dents. Chaque perçage peut par exemple traverser de part en part l'anneau de maintien de la face libre jusqu'à la face de contact.

L'anneau de maintien peut être plat.

Par ailleurs, l'anneau de maintien 60 peut être souple afin d'être déformable élastiquement lors de son utilisation selon une direction parallèle à ladite direction axiale DIRAX.

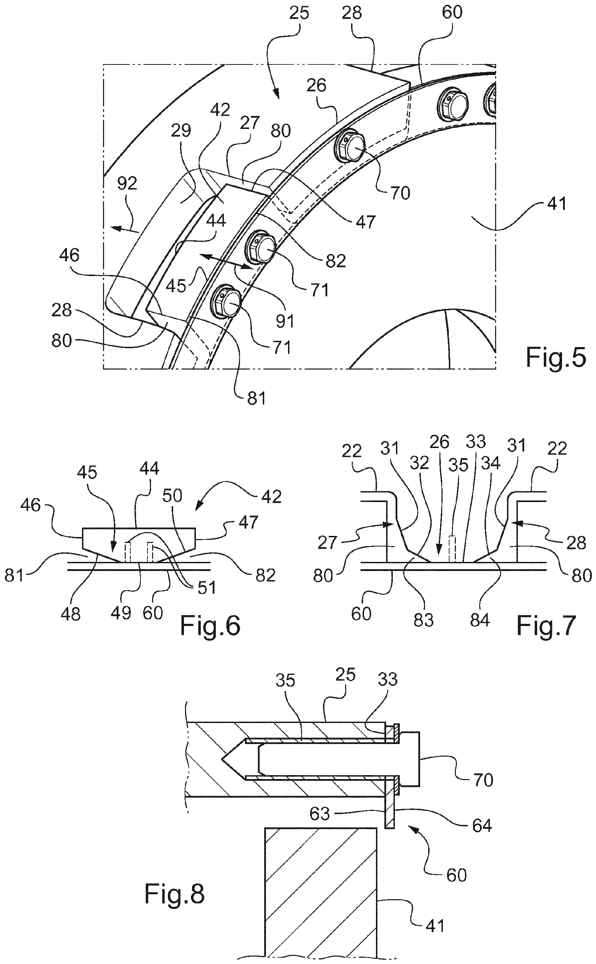

En référence à la figure 5, chaque première dent 42 du disque de frein 40 est alors positionnée dans une encoche 29 de la jante 20. Chaque encoche 29 peut accueillir une unique première dent 42.

Dès lors, chaque première dent 42 du disque de frein 40 est agencée circonférentiellement entre deux bords 27,28 de deux deuxièmes dents 25 de la jante.

Par suite, la première facette 46 d'une première dent 42 est en regard circonférentiellement d'un bord 28 d'une deuxième dent et la deuxième facette 47 de cette même première dent 42 est en regard circonférentiellement d'un bord 27 d'une autre deuxième dent. De plus, la face avant 44 de cette même première dent 42 est en regard axialement d'une partie du flanc 22 de la jante.

Selon un autre aspect, l'anneau de maintien 60 est alors fixé à chaque première dent 42 et à chaque deuxième dent 25, par exemple par vissage ou rivetage. Par exemple, l'anneau de maintien 60 est vissé par deux vis 71 à chaque première dent et par une vis 70 à chaque deuxième dent.

En particulier, la face de contact 64 de l'anneau de maintien 60 est alors accolée à des sections de chaque face d'extrémité 26 et de chaque face arrière 45.

L'anneau de maintien est fixé dans une position imposant la présence d'un jeu circonférentiel 80 entre chaque première dent 42 et les deux deuxièmes dents 25 entre lesquelles la première dent 42 est circonférentiellement agencée. Par suite, lorsque l'anneau de maintien est fixé aux premières dents et aux deuxièmes dents, la première facette 46 d'une première dent 42 est séparée circonférentiellement d'un bord 28 d'une deuxième dent par un jeu circonférentiel et la deuxième facette 47 de cette même première dent 42 est séparée circonférentiellement d'un bord 27 d'une autre deuxième dent par un autre jeu circonférentiel. Un jeu axial sépare la première dent du flanc 22.

L'anneau de maintien peut empêcher une première dent d'entrer en contact avec la jante.

Néanmoins, la souplesse de l'anneau de maintien 60 peut conférer à chaque première dent 42 une liberté de mouvement 91 dans une encoche 29.

Selon un autre aspect et en référence à la figure 6, l'anneau de maintien 60 peut être accolé partiellement contre chaque face arrière 45 en l'absence de déformation de l'anneau de maintien 60.

Par exemple, chaque face arrière 45 peut comprendre trois tronçons différents. Selon une direction circonférentielle allant d'une première facette 46 vers une deuxième facette 47 d'une première dent, chaque face arrière peut être décomposée en un premier tronçon d'extrémité 48 puis un tronçon central 49 suivi d'un deuxième tronçon d'extrémité 50. Par exemple, seuls les tronçons centraux des premières dents sont coplanaires. Dès lors, en l'absence de déformation de l'anneau de maintien 60 un premier jeu axial 81 peut séparer le premier tronçon d'extrémité 48 d'une première dent et l'anneau de maintien 60 et un deuxième jeu axial 82 peut séparer le deuxième tronçon d'extrémité 50 de cette même première dent et l'anneau de maintien 60, l'anneau de maintien 60 étant fixé uniquement au tronçon central 49 de cette même première dent. Cette forme peut être remplacée par une courbe.

Selon un autre aspect et en référence à la figure 7, l'anneau de maintien 60 peut être accolé partiellement contre chaque face d'extrémité 26 des deuxièmes dents en l'absence de déformation de l'anneau de maintien 60.

Par exemple, chaque face d'extrémité 26 peut comprendre trois secteurs différents. Selon une direction circonférentielle allant d'un bord 27 vers l'autre bord 28 d'une face d'extrémité 26, chaque face d'extrémité 26 peut être décomposée en un premier secteur d'extrémité 32 puis un secteur central 33 suivi d'un deuxième secteur d'extrémité 34. Par exemple, seuls les secteurs centraux des premières dents sont coplanaires. Dès lors, en l'absence de déformation de l'anneau de maintien 60 un premier jeu de fonctionnement 83 peut séparer le premier secteur d'extrémité 32 d'une deuxième dent et l'anneau de maintien 60 et un deuxième jeu de fonctionnement 84 peut séparer le deuxième secteur d'extrémité 34 de cette même deuxième dent et l'anneau de maintien 60, l'anneau de maintien 60 étant uniquement fixé au secteur central 33 de cette même deuxième dent. Cette forme peut être remplacée par une courbe.

Selon un autre aspect, au moins un jeu circonférentiel 80 peut avoir une valeur qui augmente selon un sens 92 allant de l'anneau de maintien 60 vers le flanc 22. En effet, le bord correspondant peut présenter une face inclinée 31 à cet effet, à savoir inclinée par rapport à un plan passant par l'axe de rotation AXROT et une extrémité de la face d'extrémité correspondante.

Selon un autre aspect et en référence à la figure 8 parallèlement à la direction axiale l'anneau de maintien 60 peut être uniquement en vis-à-vis des premières dents 42 du disque de frein 40.

Par exemple, la hauteur d'anneau 66 de l'anneau de maintien est inférieure ou égale à la hauteur de dent 55 des premières dents.

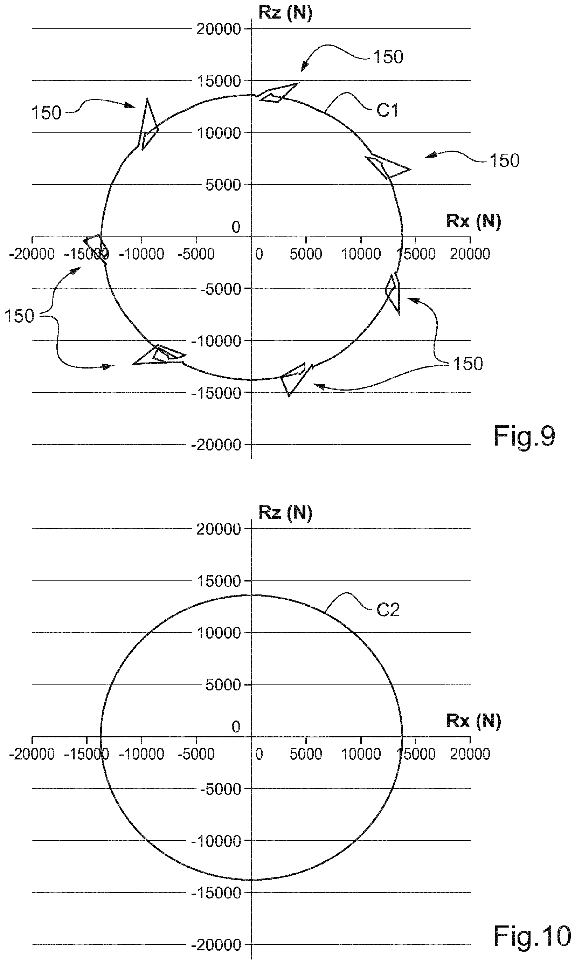

Les figures 9 à 11 illustrent les avantages de l'invention.

La figure 9 présente une première courbe C1 qui illustre la charge entre un disque de frein et une jante usuelle. Cette première courbe C1 présente des secteurs 150 illustrant des « sauts de dents » générateurs de vibrations.

La figure 10 présente une deuxième courbe C2 qui illustre la charge entre un disque de frein et une jante selon l'invention. On note l'absence des secteurs 150 de la figure 9.

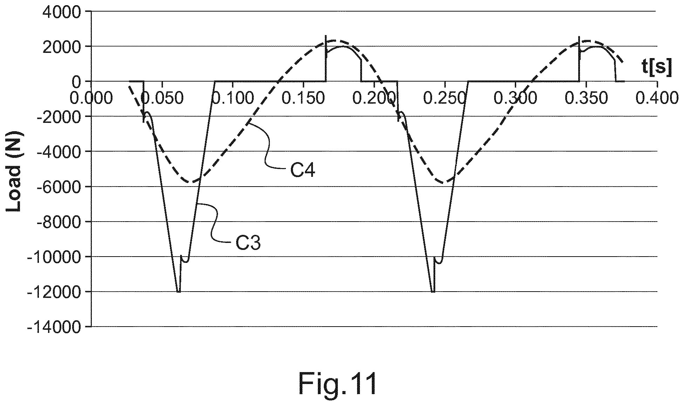

La figure 11 présente une troisième courbe C3 illustrant la charge d'une première dent selon l'état de la technique et une quatrième courbe C4 illustrant la charge d'une première dent selon l'invention. On note que l'invention tend à réduire la charge d'une première dent.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est définie dans les revendications ci jointes.

## Revendications

1. Système de freinage (10) muni d'un disque de frein (40) et d'une jante (20), ledit disque de frein (40) comprenant un support (41) et une pluralité de premières dents (42), lesdits premières dents (42) s'étendant chacune à partir du support (41), ladite jante (20) comprenant un corps de jante (21) et des deuxièmes dents (25) solidaires du corps de jante (21), lesdites deuxièmes dents (25) étant réparties circonférentiellement autour d'un axe de rotation (AXROT) de la jante (20), chaque deuxième dent (25) s'étendant parallèlement à une direction axiale (DIRAX) à partir d'un flanc (22) du corps de jante (21) jusqu'à une face d'extrémité (26) de la deuxième dent (25), chaque deuxième dent (25) s'étendant circonférentiellement entre deux bords (27, 28), ladite jante (20) présentant des encoches (29), chaque encoche (29) étant délimitée par ledit flanc (22) et deux bords (27, 28) de deux deuxièmes dents (25) adjacentes, chaque première dent (42) étant positionnée dans une dite encoche (29), chaque première dent (42) s'étendant parallèlement à ladite direction axiale (DIRAX) d'une face avant (44) en regard dudit flanc (22) vers une face arrière (45),
**caractérisé en ce que** ledit système de freinage (10) comporte un anneau de maintien (60), ledit anneau de maintien (60) étant fixé à chaque face d'extrémité (26) et à chaque face arrière (45), un jeu circonférentiel (80) séparant chaque première dent (42) de deux deuxièmes dents (25) entre lesquelles la première dent (42) est circonférentiellement agencée.

2. Système de freinage selon la revendication 1,
**caractérisé en ce que** ledit anneau de maintien (60) est déformable élastiquement parallèlement à ladite direction axiale (DIRAX) pour conférer à chaque première dent (42) une liberté de mouvement dans une encoche (29).

3. Système de freinage selon l'une quelconque des revendications 1 à 2,
**caractérisé en ce que** ledit anneau de maintien (60) est accolé partiellement contre chaque face arrière (45) en l'absence de déformation de l'anneau de maintien (60).

4. Système de freinage selon l'une quelconque des revendications 1 à 3,
**caractérisé en ce que** chaque première dent (42) s'étendant circonférentiellement d'une première facette (46) en regard d'un bord (28) d'une deuxième dent (25) jusqu'à une deuxième facette (47) en regard d'un autre bord (27) d'une autre deuxième dent (25), chaque face arrière (45) comprenant d'une première facette (46) vers une deuxième facette (47) un premier tronçon d'extrémité (48) puis un tronçon central (49) suivi d'un deuxième tronçon d'extrémité (50), un premier jeu axial (81) sépare en l'absence de déformation de l'anneau de maintien (60) le premier tronçon d'extrémité (48) et l'anneau de maintien (60) et un deuxième jeu axial (82) sépare en l'absence de déformation de l'anneau de maintien (60) le deuxième tronçon d'extrémité (50) et l'anneau de maintien (60), l'anneau de maintien (60) étant fixé uniquement au tronçon central (49).

5. Système de freinage selon l'une quelconque des revendications 1 à 4,
**caractérisé en ce que** ledit anneau de maintien (60) est accolé partiellement contre chaque face d'extrémité (26) en l'absence de déformation de l'anneau de maintien (60).

6. Système de freinage selon l'une quelconque des revendications 1 à 5,
**caractérisé en ce que** chaque face d'extrémité (26) comprenant d'un bord (27) vers l'autre bord (28) de cette face d'extrémité (26) un premier secteur d'extrémité (32) puis un secteur central (33) suivi d'un deuxième secteur d'extrémité (34), un premier jeu de fonctionnement (83) sépare en l'absence de déformation de l'anneau de maintien (60) le premier secteur d'extrémité (32) et l'anneau de maintien (60) et un deuxième jeu de fonctionnement (84) sépare en l'absence de déformation de l'anneau de maintien (60) le deuxième secteur d'extrémité (34) et l'anneau de maintien (60), l'anneau de maintien (60) étant uniquement fixé au secteur central (33).

7. Système de freinage selon l'une quelconque des revendications 1 à 6,
**caractérisé en ce qu'**au moins un dit jeu circonférentiel (80) a une valeur qui augmente selon un sens (92) allant de l'anneau de maintien (60) vers le flanc (22).

8. Système de freinage selon l'une quelconque des revendications 1 à 7,
**caractérisé en ce que** ledit système de freinage (10) comporte au moins une plaquette de frein (96) et un actionneur (95), ledit actionneur (95) étant configuré pour accoler lors d'un freinage ladite au moins une plaquette de frein (96) et ledit disque de frein (40).

9. Système de freinage selon l'une quelconque des revendications 1 à 8,
**caractérisé en ce que** ledit support (41) a une forme de disque creux en son centre qui s'étend parallèlement à la direction axiale entre deux faces de disque (56, 53) formant respectivement deux pistes de freinage.

10. Système de freinage selon l'une quelconque des revendications 1 à 9,
**caractérisé en ce que** parallèlement à ladite direction axiale ledit anneau de maintien (60) est uniquement en vis-à-vis des premières dents (42) du disque de frein (40).

11. Système de freinage selon l'une quelconque des revendications 1 à 10,
**caractérisé en ce que** ledit disque de frein (40) est plat.

12. Système de freinage selon l'une quelconque des revendications 1 à 11,
**caractérisé en ce que** ledit anneau de maintien (60) est plat.

13. Giravion (1) comprenant au moins un système de freinage (10),
**caractérisé en ce que** ledit système de freinage (10) est selon l'une quelconque des revendications 1 à 12.

## Patentansprüche

1. Bremssystem (10), das mit einer Bremsscheibe (40) und einem Bremsring (20) versehen ist, wobei die Bremsscheibe (40) einen Träger (41) und eine Mehrzahl von ersten Zähnen (42) aufweist, wobei sich die ersten Zähne (42) jeweils von dem Träger (41) aus erstrecken, wobei der Bremsring (20) einen Bremsringkörper (21) und mit dem Bremsringkörper (21) fest verbundene zweite Zähne (25) aufweist, wobei die zweiten Zähne in Umfangsrichtung um eine Drehachse (AXROT) des Bremsrings (20) verteilt sind, wobei sich jeder zweite Zahn (25) parallel zu einer axialen Richtung (DIRAX) von einer Flanke (22) des Bremsringkörpers (21) zu einer Endfläche (26) des zweiten Zahns (25) erstreckt, wobei jeder zweite Zahn (25) sich in Umfangsrichtung zwischen zwei Kanten (27, 28) erstreckt, wobei der Bremsring (20) Kerben (29) aufweist, wobei jede Kerbe (29) durch die Flanke (22) und zwei Kanten (27, 28) von zwei benachbarten zweiten Zähnen (25) begrenzt ist, wobei jeder erste Zahn (42) in einer solchen Kerbe (29) positioniert ist, wobei sich jeder erste Zahn (42) parallel zu der axialen Richtung (DIRAX) von einer der Flanke (22) zugewandten vorderen Fläche (44) zu einer hinteren Fläche (45) erstreckt,
**dadurch gekennzeichnet, dass** das Bremssystem (10) einen Haltering (60) umfasst, wobei der Haltering (60) an jeder Endfläche (26) und an jeder hinteren Fläche (45) befestigt ist, wobei ein Spiel (80) in Umfangsrichtung jeden ersten Zahn (42) von zwei zweiten Zähnen (25) trennt, zwischen denen der erste Zahn (42) in Umfangsrichtung angeordnet ist.

2. Bremssystem nach Anspruch 1,
**dadurch gekennzeichnet, dass** der Haltering (60) parallel zu der axialen Richtung (DIRAX) elastisch verformbar ist, um jedem ersten Zahn (42) in einer Kerbe (29) Bewegungsfreiheit zu geben.

3. Bremssystem nach einem der Ansprüche 1 bis 2,
**dadurch gekennzeichnet, dass** in Abwesenheit von Verformung des Halterings (60) der Haltering (60) teilweise an jeder hinteren Fläche (45) anliegt.

4. Bremssystem nach einem der Ansprüche 1 bis 3,
**dadurch gekennzeichnet, dass** sich jeder erste Zahn (42) in Umfangsrichtung von einer ersten Facette (46), die einer Kante (28) eines zweiten Zahns (25) zugewandt ist, zu einer zweiten Facette (47) erstreckt, die einer anderen Kante (27) eines anderen zweiten Zahns (25) zugewandt ist, dass jede hintere Fläche (45) von einer ersten Facette (46) bis zu einer zweiten Facette (47) einen ersten Endabschnitt (48), dann einen Mittelabschnitt (49) und darauf folgend einen zweiten Endabschnitt (50) umfasst, dass in Abwesenheit von Verformung des Halterings (60) ein erstes axiales Spiel (81) den ersten Endabschnitt (48) und den Haltering (60) trennt, dass in Abwesenheit von Verformung des Halterings (60) ein zweites axiales Spiel (82) den zweiten Endabschnitt (50) und den Haltering (60) trennt, und dass der Haltering (60) nur am Mittelabschnitt (49) befestigt ist.

5. Bremssystem nach einem der Ansprüche 1 bis 4,
**dadurch gekennzeichnet, dass** in Abwesenheit von Verformung des Halterings (60) der Haltering (60) teilweise an jeder Endfläche (26) anliegt.

6. Bremssystem nach einem der Ansprüche 1 bis 5,
**dadurch gekennzeichnet, dass** jede Endfläche (26) von einer Kante (27) bis zur anderen Kante (28) dieser Endfläche (26) einen ersten Endsektor (32), dann einen mittleren Sektor (33) und darauf folgend einen zweiten Endsektor (34) umfasst, dass in Abwesenheit von Verformung des Halterings (60) ein erstes Betriebsspiel (83) den ersten Endsektor (32) und den Haltering (60) trennt, und dass in Abwesenheit von Verformung des Halterings (60) ein zweites Betriebsspiel (84) den zweiten Endsektor (34) und den Haltering (60) trennt, und dass der Haltering (60) nur an dem zentralen Sektor (33) befestigt ist.

7. Bremssystem nach einem der Ansprüche 1 bis 6,
**dadurch gekennzeichnet, dass** mindestens ein besagtes Spiel in Umfangsrichtung (80) einen Wert hat, der in einer Richtung (92) vom Haltering (60) zur Flanke (22) zunimmt.

8. Bremssystem nach einem der Ansprüche 1 bis 7,
**dadurch gekennzeichnet, dass** das Bremssystem (10) mindestens einen Bremsklotz (96) und einen Aktuator (95) umfasst, wobei der Aktuator (95) konfiguriert ist, um den mindestens einen Bremsklotz (96) und die Bremsscheibe (40) während des Bremsens aneinander zur Anlage zu bringen.

9. Bremssystem nach einem der Ansprüche 1 bis 8,
**dadurch gekennzeichnet, dass** der Träger (41) die Form einer in ihrer Mitte hohlen Scheibe hat, die sich parallel zur axialen Richtung zwischen zwei Scheibenflächen (56, 53) erstreckt, die jeweils zwei Bremsflächen bilden.

10. Bremssystem nach einem der Ansprüche 1 bis 9,
**dadurch gekennzeichnet, dass** der Haltering (60) parallel zu der axialen Richtung nur den ersten Zähnen (42) der Bremsscheibe (40) gegenüberliegt.

11. Bremssystem nach einem der Ansprüche 1 bis 10,
**dadurch gekennzeichnet, dass** die Bremsscheibe (40) eben ist.

12. Bremssystem nach einem der Ansprüche 1 bis 11,
**dadurch gekennzeichnet, dass** der Haltering (60) eben ist.

13. Drehflügelflugzeug (1) mit mindestens einem Bremssystem (10),
**dadurch gekennzeichnet, dass** das Bremssystem (10) einem der Ansprüche 1 bis 12 entspricht.

## Claims

1. Braking system (10) provided with a brake disc (40) and a rim (20), said brake disc (40) comprising a carrier (41) and a plurality of first teeth (42), said first teeth (42) each extending from the carrier (41), said rim (20) comprising a rim body (21) and second teeth (25) rigidly connected to the rim body (21), said second teeth (25) being distributed circumferentially around an axis of rotation (AXROT) of the rim (20), each second tooth (25) extending parallel to an axial direction (DIRAX) from one flank (22) of the rim body (21) to an end face (26) of the second tooth (25), each second tooth (25) extending circumferentially between two edges (27, 28), said rim (20) having notches (29), each notch (29) being delimited by said flank (22) and two edges (27, 28) of two adjacent second teeth (25), each first tooth (42) being positioned in one such notch (29), each first tooth (42) extending parallel to said axial direction (DIRAX) from a front face (44) opposite said flank (22) towards a rear face (45), **characterised in that** said braking system (10) comprises a retaining ring (60), said retaining ring (60) being fastened to each end face (26) and to each rear face (45), a circumferential clearance (80) separating each first tooth (42) from two second teeth (25) between which the first tooth (42) is circumferentially arranged.

2. Braking system according to claim 1, **characterised in that** said retaining ring (60) is elastically deformable parallel to said axial direction (DIRAX) to give each first tooth (42) freedom of movement in a notch (29).

3. Braking system according to any one of claims 1 to 2, **characterised in that** said retaining ring (60) is partially contiguous against each rear face (45) in the absence of deformation of the retaining ring (60).

4. Braking system according to any one of claims 1 to 3, **characterised in that** each first tooth (42) extending circumferentially from a first facet (46) opposite an edge (28) of a second tooth (25) to a second facet (47) opposite another edge (27) of another second tooth (25), each rear face (45) comprising, from a first facet (46) towards a second facet (47), a first end section (48), then a central section (49) followed by a second end section (50), a first axial clearance (81), in the absence of deformation of the retaining ring (60), separates the first end section (48) and the retaining ring (60) and a second axial clearance (82), in the absence of deformation of the retaining ring (60), separates the second end section (50) and the retaining ring (60), the retaining ring (60) being fastened only to the central section (49).

5. Braking system according to any one of claims 1 to 4, **characterised in that** said retaining ring (60) is partially contiguous against each end face (26) in the absence of deformation of the retaining ring (60).

6. Braking system according to any one of claims 1 to 5, **characterised in that** each end face (26) comprising, from one edge (27) to the other edge (28) of this end face (26), a first end sector (32), then a central sector (33), followed by a second end sector (34), a first operating clearance (83), in the absence of deformation of the retaining ring (60), separates the first end sector (32) and the retaining ring (60) and a second operating clearance (84), in the absence of deformation of the retaining ring (60), separates the second end sector (34) and the retaining ring (60), the retaining ring (60) being fastened only to the central sector (33).

7. Braking system according to any one of claims 1 to 6, **characterised in that** at least one such circumferential clearance (80) has a value which increases in a direction (92) going from the retaining ring (60) towards the flank (22).

8. Braking system according to any one of claims 1 to 7, **characterised in that** said braking system (10) comprises at least one brake pad (96) and one actuator (95), said actuator (95) being designed to be contiguous during braking with said at least one brake pad (96) and said brake disc (40).

9. Braking system according to any one of claims 1 to 8, **characterised in that** said carrier (41) has the shape of a hollow disc at its centre which extends parallel to the axial direction between two disc faces (56, 53) respectively forming two braking tracks.

10. Braking system according to any one of claims 1 to 9, **characterised in that**, parallel to said axial direction, said retaining ring (60) is only opposite the first teeth (42) of the brake disc (40).

11. Braking system according to any one of claims 1 to 10, **characterised in that** said brake disc (40) is flat.

12. Braking system according to any one of claims 1 to 11, **characterised in that** said retaining ring (60) is flat.

13. Rotorcraft (1) comprising at least one braking system (10), **characterised in that** said braking system (10) is according to any one of claims 1 to 12.
